# EUROPEAN PATENT APPLICATION

(11) **EP 4 760 970 A1**
(43) Date of publication of application: **17.06.2026**
(21) Application number: 25211626.4
(22) Date of filing: 28.10.2025
(51) Int. Cl.: H01M 50/595, H01M 10/04, H01M 10/052, H01M 10/0585

(54) **ELECTRODE ASSEMBLY AND SECONDARY BATTERY INCLUDING THE SAME**

(30) Priority: 12.12.2024 KR 20240184770
(71) Applicant: SAMSUNG SDI CO., LTD., Yongin-si, Gyeonggi-do 17084 (KR)
(72) Inventor: Kang, Sanha, 17084 Yongin-si, Gyeonggi-do (KR)
(74) Representative: Meissner Bolte Partnerschaft mbB

(57) **Abstract**

An electrode assembly (110, 110') includes a first electrode plate (111, 111'), a second electrode plate (112, 112') on the first electrode plate (111, 111'), a separator (113, 113') between the first electrode plate (111, 111') and the second electrode plate (112, 112'), and a first adhesive member (115, 115') covering a lower area of a laminated body in which the first electrode plate (111, 111'), the separator (113, 113'), and the second electrode plate (112, 112') are repeatedly laminated, wherein the first adhesive member (115, 115') has a plurality of holes (115h, 115h') penetrating the first adhesive member (115, 115').

## Description

The present invention relates to an electrode assembly and a secondary battery including the same.

Secondary batteries are batteries that can be charged and discharged, unlike primary batteries that cannot be recharged. Low-capacity battery cells are used in small, portable electronic devices such as smartphones, feature phones, laptops, digital cameras, and camcorders, while large-capacity battery cells are widely used as motor drive power supplies in hybrid cars, electric cars, and other vehicles, and as power storage batteries. Such a battery cell includes an electrode assembly having a positive electrode and a negative electrode, a case accommodating the electrode assembly, and electrode terminals coupled to the electrode assembly.

### SUMMARY

The present invention relates to an electrode assembly, comprising a first electrode plate, a second electrode plate on the first electrode plate, a separator between the first electrode plate and the second electrode plate, and a first adhesive member covering a lower area of a laminated body in which the first electrode plate, the separator, and the second electrode plate are repeatedly laminated, wherein the first adhesive member has a plurality of holes penetrating the first adhesive member.

The laminated body may have a square shape.

The square shape may include a first surface to a sixth surface, an electrode tab may be on the first surface, and the first adhesive member may cover a second surface of the first surface to the sixth surface, the second surface being opposite to the first surface.

The first adhesive member may extend to a fifth surface and the sixth surface, each of the fifth surface and the sixth surface intersecting the second surface, the first adhesive member covering an area of the fifth surface and an area of the sixth surface.

An area of the first adhesive member covering the second surface may be 80% to 90% of an area of the second surface.

A total area of a plurality of the holes penetrating the first adhesive member may be 20% to 40% of an area of the first adhesive member.

The laminated body may include a winding of the first electrode plate, the separator, and the second electrode plate, and the first adhesive member may be perpendicular to a winding direction of the winding.

The electrode assembly may further include a second adhesive member having at least an area covering an edge portion of the laminated body.

The first adhesive member and the second adhesive member may each include a non-stretched tape.

The second adhesive member may be parallel to the winding direction of the winding.

The present invention further relates to a secondary battery, comprising a case, an electrode assembly accommodated in the case, a cap assembly covering an open surface of the case, and an electrode terminal protruding outward by penetrating the cap assembly and electrically coupled to the electrode assembly, wherein the electrode assembly has a first adhesive member in a lower area thereof, and the first adhesive member has a plurality of holes penetrating the first adhesive member.

The electrode assembly may include a first electrode plate, a second electrode plate on the first electrode plate, a separator between the first electrode plate and the second electrode plate, and a laminated body in which the first electrode plate, the separator, and the second electrode plate are repeatedly laminated.

The laminated body may have a square shape, the square shape may include a first surface to a sixth surface, an electrode tab may be on the first surface, and the first adhesive member may cover a second surface of the first surface to the sixth surface, the second surface being opposite to the first surface.

The first adhesive member may extend to a fifth surface and the sixth surface of the first surface to the sixth surface, each of the fifth surface and the sixth surface intersecting the second surface, the first adhesive member covering an area of the fifth surface and an area of the sixth surface.

An area of the first adhesive member covering the second surface may be 80% to 90% of an area of the second surface.

A total area of the plurality of holes penetrating the first adhesive member may be 20% to 40% of an area of the first adhesive member.

The electrode assembly may include a winding of the first electrode plate, the separator, and the second electrode plate, and the first adhesive member may be perpendicular to a winding direction of the winding.

The secondary battery may further include a second adhesive member having at least an area covering an edge portion of the laminated body.

The first adhesive member and the second adhesive member may each include a non-stretched tape.

The second adhesive member may be parallel to the winding direction of the winding.

However, the technical problems to be solved by the invention are not limited to the problems described above, and other problems not mentioned may be clearly understood by those skilled in the art from the description of the invention described below.

### BRIEF DESCRIPTION OF THE DRAWINGS

The following drawings attached to the specification illustrate preferred embodiments of the invention and, together with the detailed description of the invention described below, serve to further understand the technical idea of the invention; therefore, the invention should not be interpreted as being limited to matters described in such drawings.

Features will become apparent to those of ordinary skill in the art by describing in detail exemplary embodiments with reference to the attached drawings, in which:
FIG. 1 is a front view schematically illustrating an example of an electrode assembly according to an embodiment of the invention;
FIG. 2 is a perspective view schematically illustrating an example of the electrode assembly of FIG. 1;
FIG. 3 is a perspective view illustrating an example of a stacked-type electrode assembly;
FIG. 4 is a perspective view illustrating an example of a wound-type electrode assembly;
FIG. 5 is a drawing illustrating an area viewed from a direction A of FIG. 3;
FIG. 6 is a front view schematically illustrating another example of an electrode assembly according to an embodiment of the invention;
FIG. 7 is a perspective view schematically illustrating an example of the electrode assembly of FIG. 6;
FIG. 8 is a perspective view schematically illustrating a secondary battery according to an embodiment of the invention; and
FIG. 9 is an exploded perspective view schematically illustrating the secondary battery of FIG. 8.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, preferred embodiments of the invention will be described in detail with reference to the attached drawings. Prior to this, terms or words used in the specification and claims should not be interpreted as limited to usual or dictionary meanings and should be interpreted as meanings and concepts that conform to the technical idea of the invention based on the principle that the inventor may appropriately define the concept of a term to explain his or her own invention in the best way. Therefore, the embodiments described in the specification and the configurations illustrated in the drawings are only some of the most preferred embodiments of the invention and do not represent all the technical idea of the invention, and it should be understood that there may be various equivalents and modified examples that may replace them at the time of filing the application.

In some embodiments, when used herein, the words "comprise", "include" and/or "comprising", "including" specify the presence of stated features, numbers, steps, operations, members, components and/or groups thereof, but do not exclude the presence or addition of one or more other features, numbers, operations, members, components and/or groups thereof.

In some embodiments, to aid understanding of the invention, the attached drawings are not drawn to an actual scale, but the dimensions of some components may be exaggerated. In some embodiments, which are different from each other, the same reference numbers may be assigned to the same components.

Although the terms first, second, or the like are used to describe various components, these components are not limited by these terms. These terms are only used to distinguish one component from another, and unless otherwise stated, it is of course the case that a first component may also be a second component.

Throughout the specification, unless otherwise specifically stated, each component may be singular or plural.

Any configuration being placed "at the top (or bottom) of" a component or "on (or below)" a component may mean not only that any configuration is arranged in contact with the upper (or lower) surface of the component, but also that other configurations may be interposed between the component and any configuration arranged on (or below) the component.

In some embodiments, in case that it is described that a component is "connected," "coupled," or "linked" to another component, it should be understood that the components may be directly connected or linked to each other, but that other components may also be "interposed" between each component, or that each component may be "connected," "coupled" or "linked" through other components. In some embodiments, when we say that a part is electrically coupled to another part, this may include not only cases where the parts are directly connected to each other, but also cases where the parts are connected to each other with another element interposed therebetween.

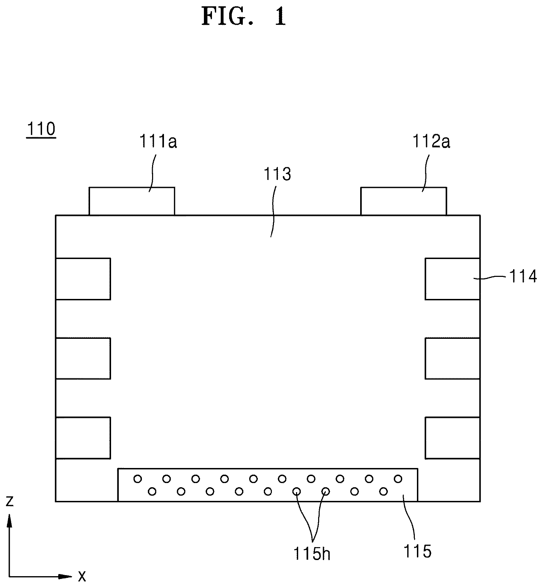

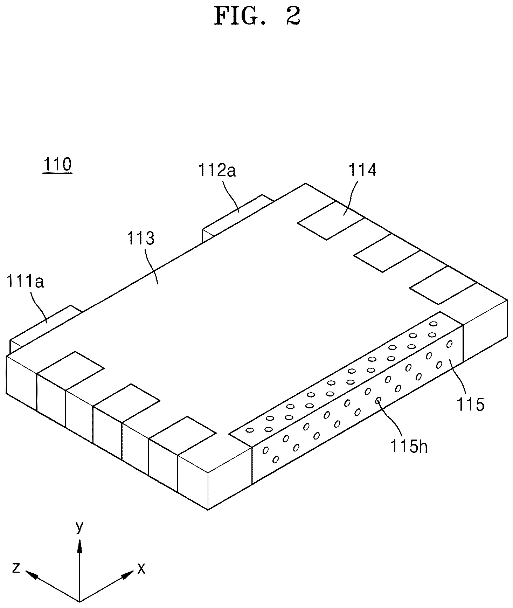

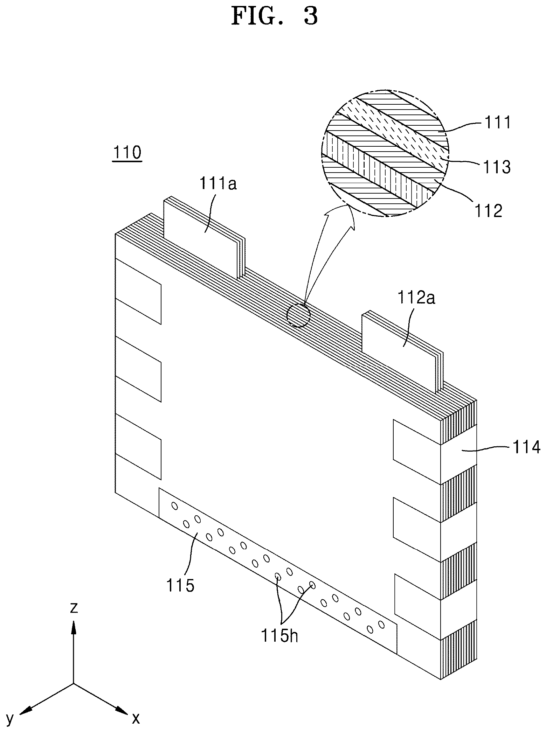

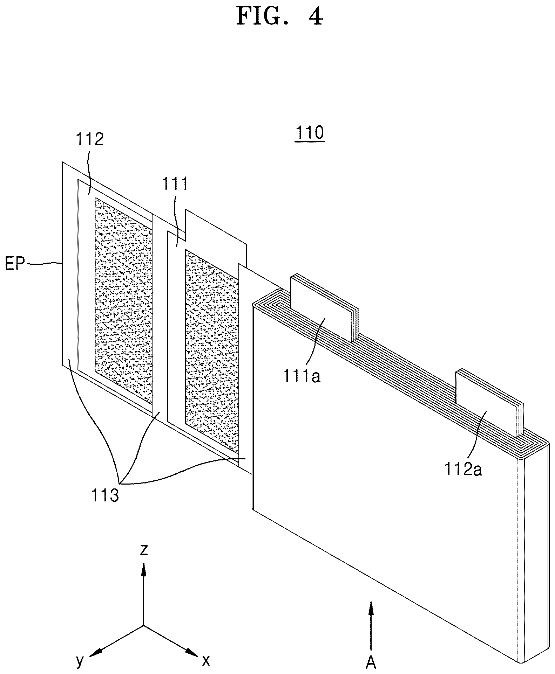

FIG. 1 is a front view schematically illustrating an example of an electrode assembly according to an embodiment of the invention, FIG. 2 is a perspective view schematically illustrating an example of the electrode assembly of FIG. 1, FIG. 3 is a perspective view illustrating an example of a stacked-type electrode assembly, and FIG. 4 is a perspective view illustrating an example of a wound-type electrode assembly.

Referring to FIGS. 1 to 4, an electrode assembly 110 may be formed by winding or laminating a laminated body of a first electrode plate 111, a separator 113, and a second electrode plate 112 each made in a thin plate shape or film shape. In case that the electrode assembly 110 is a laminated body wound, the electrode assembly 110 may be wound in a first direction x intersecting a winding axis (z direction) with the winding axis (z direction) as a center.

In some embodiments, the electrode assembly 110 may be a stack-type rather than a wound-type, in which case the electrode assembly 110 may include a square laminated body in which the first electrode plate 111, the separator 113, and the second electrode plate 112 are repeatedly laminated.

The shape of the electrode assembly 110 is not limited in the invention. In some embodiments, the electrode assembly 110 may be a Z-stacked electrode assembly in which a positive electrode plate and a negative electrode plate are inserted on both sides of the separator 113 bent in Z-stacking. In some embodiments, the electrode assembly 110 may have one or more electrode assemblies housed inside a battery case, and long side surfaces thereof laminated adjacent to each other, and in the invention, the first electrode plate 111 of the electrode assembly 110 may serve as a negative electrode and the second electrode plate 112 as a positive electrode. In some embodiments, the opposite may also be possible.

The first electrode plate 111 may be formed by applying a first electrode active material, such as graphite, carbon, or the like, to a first electrode current collector plate having a metal foil, such as copper, a copper alloy, nickel or a nickel alloy, and include a first electrode tab 111a (or a first non-coated portion), which is an area where the first electrode active material is not applied.

The second electrode plate 112 may be formed by applying a second electrode active material, such as a transition metal oxide or the like, to a second electrode current collector plate having a metal foil, such as aluminum or an aluminum alloy, and include a second electrode tab 112a (or a second non-coated portion) which is an area where the second electrode active material is not applied.

In some embodiments, the electrode assembly 110 may be accommodated in the battery case together with electrolyte.

In some embodiments, the separator 113 arranged between the first electrode plate 111 and the second electrode plate 112 may be longer than the first electrode plate 111 and the second electrode plate 112 and additionally wound by a length extending longer than the first electrode plate 111 and the second electrode plate 112 during the winding to cover the first electrode plate 111 and the second electrode plate 112, causing the separator 113 to be positioned at the outermost portion of the electrode assembly 110, so that the first electrode plate 111 and the second electrode plate 112 may be insulated from the outside by the separator 113.

In some embodiments, during the formation process of a secondary battery, the electrode assembly 110 may be accommodated in the battery case together with the electrolyte. In the case that the electrode assembly 110 is a stacked-type, the laminated body, in which the first electrode plate 111, the separator 113, and the second electrode plate 112 are repeatedly laminated (e.g., layered), may not be adhered or fixed to each other, so that gaps in the laminated body may occur. Such a laminated body may come into contact with a battery case during the process of being inserted inside the battery case, causing damage.

In some embodiments, in the case that the electrode assembly 110 is a wound-type, the electrode assembly 110 may be damaged when coming in contact with a battery case during the process of being inserted inside the battery case, due to gaps in the wound laminated body, which may occur as the winding becomes loose.

In some embodiments, the first electrode plate 111 and the second electrode plate 112 may be manufactured in the form of metal foil, easily causing damage even by a small contact, which may become a factor lowering the stability of a secondary battery.

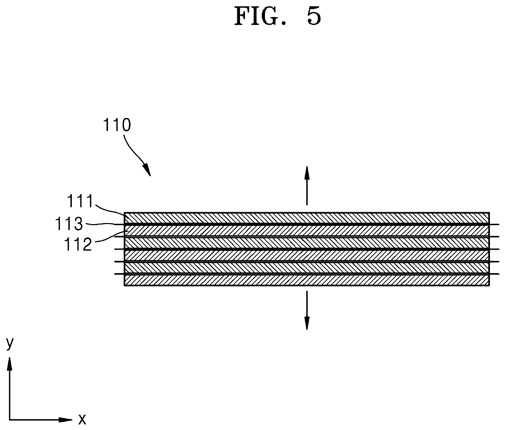

FIG. 5 is a drawing illustrating an area viewed from a top-down direction of FIG. 3.

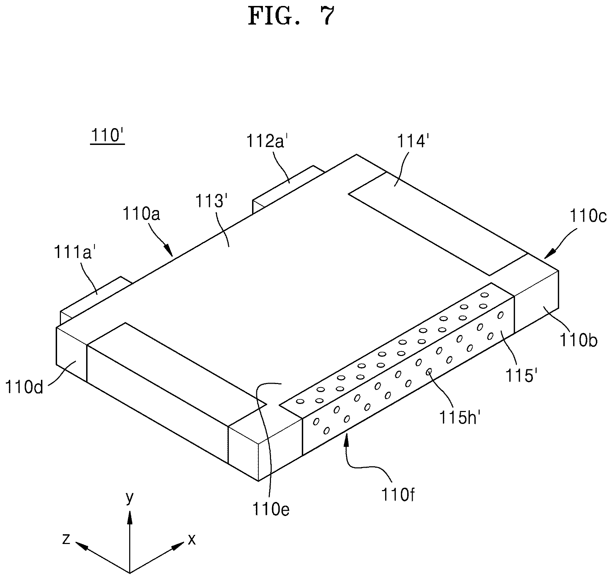

Referring to FIG. 5, the electrode assembly 110 of a stacked-type electrode assembly may be laminated in a square shape. In this regard, a second surface 110b (see FIG. 7), which is opposite to a first surface 110a, on which the first electrode tab 111a and the second electrode tab 112a are formed, may be seen to have the appearance of a laminated body in which the first electrode plate 111, the separator 113, and the second electrode plate 112 are laminated. In this regard, the second surface 110b is a part which is first inserted into the battery case during the formation process of a battery, and in the case that a gap occurs in the second surface of the electrode assembly 110, the laminated body may come into contact with the battery case during the process being inserted into the battery case, causing damage to the electrode assembly 110. Referring to FIG. 7, the electrode assembly 110 may further include a third surface 110c, a fourth surface 110d, a fifth surface 110e and a sixth surface 110f opposite the fifth surface 110e.

In some embodiments, in the case that the electrode assembly 110 is a stacked-type, the second surface, which is opposite to the first surface, on which the first electrode tab 111a and the second electrode tab 112a are formed, and the third surface and the fourth surface each intersecting the first surface and the second surface may be easily spread due to the structure in which the first electrode plate 111, the separator 113, and the second electrode plate 112 are laminated.

In some embodiments, the third surface may include a surface among both side surfaces of the electrode assembly 110, and the fourth surface may include the other surface among both side surfaces of the electrode assembly 110, excluding the third surface, and the fifth surface may include a surface among main surfaces of the electrode assembly 110, and the sixth surface may include another surface among the main surfaces of the electrode assembly 110, excluding the fifth surface.

In some embodiments, to prevent such a gap of the electrode assembly 110, a first adhesive member 115 and a second adhesive member 114 may be arranged on the electrode assembly 110.

The second adhesive member 114 may be arranged to simultaneously wrap around a main surface and side surfaces of the electrode assembly 110. In some embodiments, a plurality of the second adhesive member 114 may be arranged spaced apart from each other while simultaneously wrapping around the main surface and the side surfaces of the electrode assembly 110. In some embodiments, the plurality of the second adhesive member 114 may be arranged in three pieces, spaced apart from each other while simultaneously wrapping around the main surface and the side surfaces of the electrode assembly 110.

In some embodiments, the second adhesive member 114 may be attached to an area of the fifth surface, which is a surface of the main surfaces of the electrode assembly 110 and then extending to cover the third surface and the sixth surface of the electrode assembly 110 in sequence, and may also be arranged attached to an area of the fifth surface and then extending to cover the fourth surface and the sixth surface of the electrode assembly 110 in sequence. That is, with the second adhesive member 114 arranged to cover both side surfaces and part of the main surface, which are areas prone to spreading of the electrode assembly 110 of a stacked-type, the electrode assembly 110 may be prevented from spreading.

In some embodiments, the second adhesive member 114 may be arranged in three pieces, spaced apart to cover both side surfaces and the main surface of the electrode assembly 110, allowing both side surfaces of the electrode assembly 110 to be fixed in three areas, upper, middle, and lower, thereby allowing the electrode assembly 110 to be fixed more firmly and not to spread apart.

In some embodiments, in the case of a wound-type electrode assembly 110, an edge portion EP remaining after being wound may not be fixed, causing the winding to become loose and gaps in the laminated body of the electrode assembly 110 to occur. In this regard, the edge portion EP of the electrode assembly 110 may be positioned in an area of a surface of the third surface, fourth surface, fifth surface and sixth surface of the electrode assembly 110, which is parallel to the winding axis (z direction) of the electrode assembly 110.

In the case of the electrode assembly 110 being a wound-type, a laminated body winding may have the separator 113 positioned at the outermost portion, causing the first adhesive member 115 and the second adhesive member 114 arranged without damages of the first electrode plate 111 and the second electrode plate 112.

The second adhesive member 114 may be positioned to simultaneously wrap around the main surface and side surfaces of the electrode assembly 110 to make at least an area of the second adhesive member 114 cover the edge portion EP of the electrode assembly 110. In some embodiments, a plurality of the second adhesive member 114 may be arranged in a direction parallel to the winding direction x of the electrode assembly 110, and at least an area of the plurality of the second adhesive member 114 may be positioned to cover the edge portion EP of the electrode assembly 110. In some embodiments, the plurality of the second adhesive member 114 may be arranged in three pieces, spaced apart from each other parallel to the winding direction x of the electrode assembly 110, and at least an area of the plurality of the second adhesive member 114 may be positioned to cover the edge portion EP of the electrode assembly 110.

In some embodiments, the second adhesive member 114 may be arranged attached to an area of the fifth surface, which is a surface among the main surfaces of the electrode assembly 110 and then extending to sequentially cover the third surface, the sixth surface side, and the fourth surface of the electrode assembly 110, and at this time, the second adhesive member 114 may be arranged to cover the edge portion EP of the electrode assembly 110 positioned on at least the third surface, the sixth surface, and the fourth surface of the electrode assembly 110. That is, the second adhesive member 114 may be arranged in the form of wrapping around the side surfaces of the electrode assembly 110 to be attached to the edge portion of the electrode assembly 110, thereby firmly fixing the edge portion of the electrode assembly 110.

In some embodiments, the second adhesive member 114 may be arranged not only to cover a surface, on which an edge portion EP of the electrode assembly 110 is positioned, but also to cover an opposite surface on which the edge portion EP of the electrode assembly 110 is positioned, in the form of wrapping around the electrode assembly 110, by extending while covering the surface, on which the edge portion EP of the electrode assembly 110 is positioned, thereby preventing the second adhesive member 114 from coming off and fixing the edge portion EP of the electrode assembly 110 more firmly.

In some embodiments, the second adhesive member 114 may be arranged in three pieces, spaced apart from each other parallel to the winding direction x of the electrode assembly 110, thereby fixing the edge portion EP of the electrode assembly 110 in three areas, upper, middle, and lower, allowing the edge portion EP of the electrode assembly 110 to be fixed more firmly.

The first adhesive member 115 may be arranged to cover a lower area of the electrode assembly 110, and for example, the first adhesive member 115 may be arranged in a direction perpendicular to the second surface of the electrode assembly 110, covering the second surface of the electrode assembly 110 and extending to the fifth surface (see FIG. 2) and the sixth surface, each intersecting the second surface to cover an area of the fifth surface and an area of the sixth surface, thereby preventing the second surface of the electrode assembly 110 from spreading apart.

In this regard, the area of the first adhesive member 115 covering the second surface may be 80% to 90% (e.g., the first adhesive member 115 may cover 80% to 90% of the area of the second surface). In case that the area of the first adhesive member 115 covering the second surface is less than 80%, a part excluding the surface covered by the first adhesive member 115 may spread apart, which may cause damage to the electrode assembly 110 when inserted into a battery case. In case that the area of the first adhesive member 115 covering the second surface is more than 90%, it may be difficult for the electrolyte injected during the formation process of a battery to enter the inside of the electrode assembly 110, and even if the area of the first adhesive member 115 covering the second surface is only 90%, gaps of the electrode assembly 110 may be sufficiently prevented, so using more than 90% may result in waste of adhesive members.

The first adhesive member 115 may include a plurality of holes 115h penetrating the first adhesive member 115, and such a plurality of holes 115h may facilitate the discharge of gas generated inside a battery case during the formation process of a battery, thereby allowing gas remaining inside the battery case, particularly inside the electrode assembly 110, to be removed. In some embodiments, the first adhesive member 115 may include a plurality of holes 115h penetrating the first adhesive member 115, thereby preventing air bubbles from being made between the first adhesive member 115 and a surface of the electrode assembly 110 when adhered to the electrode assembly 110.

In some embodiments, the area of a plurality of holes 115h penetrating through the first adhesive member 115 may be 20% to 40% of the area of the first adhesive member 115. In the case that the area of a plurality of holes 115h penetrating the adhesive member 115 is less than 20% of the area of the first adhesive member 115, gas discharge effects may be insufficient in the formation process. In the case that the area of a plurality of holes 115h penetrating the first adhesive member 115 is more than 40% of the area of the first adhesive member 115, tensile forces for preventing the second surface of the electrode assembly 110 from spreading apart may be insufficient.

In some embodiments, the first adhesive member 115 and the second adhesive member 114 may each include a tape of a non-stretched material having high tensile strength to prevent the electrode assembly 110 from spreading apart, and by wrapping around an outer perimeter of the electrode assembly 110 with the tape of a non-stretched material having high tensile strength, a volume of the electrode assembly 110 may be reduced.

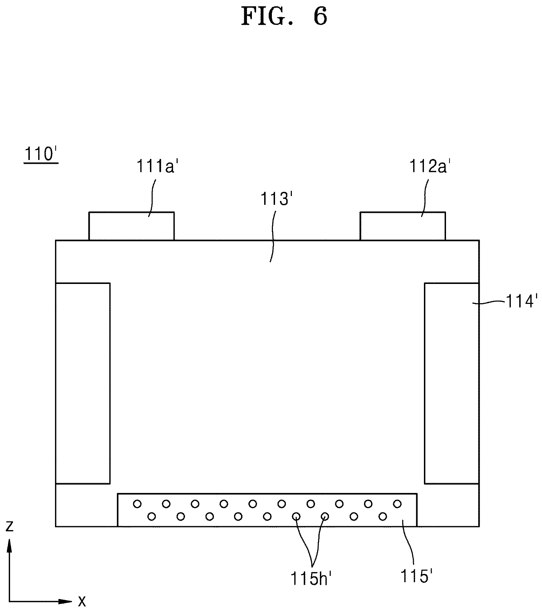

FIG. 6 is a front view schematically illustrating another example of an electrode assembly according to an embodiment of the invention, and FIG. 7 is a perspective view schematically illustrating an example of the electrode assembly of FIG. 6.

Referring to FIGS. 6 and 7, an electrode assembly 110' may be formed by winding or laminating a laminated body of a first electrode plate, a separator, and a second electrode plate each made in a thin plate shape or a film shape. In case that the electrode assembly 110' is a laminated body wound, it may be wound in a first direction x intersecting a winding axis (z direction) with the winding axis (z direction) as a center.

In some embodiments, the electrode assembly may be a stacked-type rather than a wound-type, in which case the electrode assembly 110' may include a square laminated body in which a first electrode plate, a separator, and a second electrode plate are repeatedly laminated.

The shape of the electrode assembly 110' is not limited in the invention. In some embodiments, the electrode assembly 110' may be a Z-stacked electrode assembly in which a positive electrode plate and a negative electrode plate are inserted on both sides of a separator bent in Z-stacking. In some embodiments, the electrode assembly 110' may have one or more such electrode assemblies housed inside a battery case, and long side surfaces thereof laminated adjacent to each other, and in the invention, the first electrode plate of the electrode assembly 110' may serve as a negative electrode and the second electrode plate as a positive electrode. In some embodiments, the opposite may also be possible.

The first electrode plate may be formed by applying a first electrode active material, such as graphite, carbon, or the like, to a first electrode current collector plate made of metal foil, such as copper, a copper alloy, nickel or a nickel alloy, and include a first electrode tab 111a' (or a first non-coated portion), which is an area where the first electrode active material is not applied.

The second electrode plate may be formed by applying a second electrode active material, such as a transition metal oxide or the like, to a second electrode current collector plate made of metal foil, such as aluminum or an aluminum alloy, and include a second electrode tab 112a' (or a second non-coated portion), which is an area where the second electrode active material is not applied.

In some embodiments, the electrode assembly 110' may be accommodated in a battery case together with electrolyte.

In some embodiments, the separator may be arranged between the first electrode plate and the second electrode plate, and may be longer than the first electrode plate and the second electrode plate and additionally wound by a length extending longer than the first electrode plate and the second electrode plate during the winding to cover the first electrode plate and the second electrode plate, causing a separator 113' to be positioned at the outermost portion of the electrode assembly 110', so that the first electrode plate and the second electrode plate may be insulated from the outside by the separator 113'.

In some embodiments, during the formation process of a battery, the electrode assembly 110' may be accommodated in the battery case together with an electrolyte, and in the case that the electrode assembly 110' is a stacked-type, the laminated body in which the first electrode plate 111', the separator 113', and the second electrode plate 112' are repeatedly laminated (e.g., layered on top of each other) may not be adhered or fixed to each other, and thus gaps in the laminated body may occur. Such a laminated body may come into contact with a battery case during the process of being inserted inside the battery case, causing damage.

In some embodiments, where the electrode assembly 110' is a wound-type, the electrode assembly 110' may be damaged when coming in contact with a battery case during the process of being inserted inside the battery case, due to gaps in the laminated wound body, which can occur as the winding becomes loose.

In some embodiments, the first electrode plate and the second electrode plate may be manufactured in the form of a metal foil, thereby be easily damaged even by a small contact, which may become a factor lowering the stability of a secondary battery.

The electrode assembly 110' of a stacked-type may be laminated in a square (e.g., rectangular) shape. In this regard, the second surface, which is opposite to the first surface on which the first electrode tab 111a' and the electrode tab 112a' are formed, may have the appearance of a laminated body, in which the first electrode plate, the separator, and the second electrode plate are laminated (e.g., layered). In this regard, the second surface is a part first inserted into the battery case during the formation process of a battery, and in the case that a gap occurs in the second surface of the electrode assembly 110', the laminated body may come into contact with the battery case during the process of being inserted into the battery case, causing damage to the electrode assembly 110'.

In some embodiments, in the case of the electrode assembly 110' being a stacked-type, the second surface, which is opposite to the first surface, in which the first electrode tab 111a' and the electrode tab 112a' are formed, and the third surface and the fourth surface each intersecting the first surface and the second surface may be easily spread apart due to the structure in which the first electrode plate 111', the separator 113', and the second electrode plate 112' are laminated.

In some embodiments, the third surface may include a surface among both side surfaces of the electrode assembly 110', and the fourth surface may include the other surface among the both side surfaces of the electrode assembly 110', excluding the third surface (e.g., the third surface and the fourth surface are different surfaces), and the fifth surface may include a surface among the main surfaces of the electrode assembly 110', and the sixth surface may include another surface among the main surfaces of the electrode assembly 110', excluding the fifth surface.

In some embodiments, to prevent such a gap of the electrode assembly 110', a first adhesive member 115' and a second adhesive member 114' may be arranged on the electrode assembly 110'.

The second adhesive member 114' may be arranged to simultaneously wrap around the main surface and side surfaces of the electrode assembly 110'. In some embodiments, the second adhesive member 114' may be arranged to simultaneously wrap around the main surface and side surfaces of the electrode assembly 110' extending along the side surfaces.

In some embodiments, the second adhesive member 114' may be attached to an area of the fifth surface, which is a surface of the main surfaces of the electrode assembly 110' and then extend (e.g., extend the second adhesive member 114') to cover the third surface and the sixth surface of the electrode assembly 110' in sequence, and may also be arranged attached to an area of the fifth surface and then extend to cover the fourth surface and the sixth surface of the electrode assembly 110' in sequence. That is, by being arranged to cover both side surfaces and part of the main surface, which are areas prone to spreading of the electrode assembly 110' of a stacked-type, the electrode assembly 110' may be prevented from spreading apart.

In some embodiments, the second adhesive member 114' may be arranged extending along the side surfaces to cover both side surfaces and the main surface of the electrode assembly 110', thereby fixing both side surfaces of the electrode assembly 110', causing the electrode assembly 110' to be fixed more firmly and not to spread apart.

In some embodiments, in the case of the electrode assembly 110' being a wound-type, the remaining edge portion after being wound may not be fixed, causing the winding to become loose and gaps in the laminated body of the electrode assembly 110' to occur. In this regard, the edge portion of the electrode assembly 110' may be positioned in an area of a surface of the third surface, fourth surface, fifth surface and sixth surface of the electrode assembly 110', which is parallel to the winding axis (z direction) of the electrode assembly 110'.

In the case of the electrode assembly 110' being a wound-type, the laminated body wound may have the separator 113' positioned at the outermost portion, so that the first adhesive member 115' and the second adhesive member 114' may be arranged without damaging the electrode plate.

The second adhesive member 114' may be positioned to simultaneously wrap around the main surface and side surfaces of the electrode assembly 110' to make at least an area of the second adhesive member 114' cover the edge portion of the electrode assembly 110'. In some embodiments, the second adhesive member 114' may be arranged in a direction parallel to the winding direction x of the electrode assembly 110', and in this regard, at least an area of the second adhesive member 114' may be positioned to cover the edge portion of the electrode assembly 110'. As a detailed example, the second adhesive member 114' may be arranged parallel to the winding direction x of the electrode assembly 110', and at least an area of the second adhesive member 114' may be positioned to cover an edge portion of the electrode assembly 110'.

In some embodiments, the second adhesive member 114' may be attached to an area of the fifth surface, which is a surface among the main surfaces of the electrode assembly 110' and then extend to sequentially cover the third surface, the sixth surface, and the fourth surface of the electrode assembly 110', and at this time, the second adhesive member 114' may be arranged to cover an edge portion of the electrode assembly 110' positioned on at least a surface of the third surface, the sixth surface, and the fourth surface of the electrode assembly 110'. That is, the second adhesive member 114' may be arranged in the form of wrapping around the side surfaces of the electrode assembly 110' to be attached to the edge portion of the electrode assembly 110', thereby firmly fixing the edge portion of the electrode assembly 110'.

In some embodiments, the second adhesive member 114' may be arranged not only to cover the surface, on which the edge portion of the electrode assembly 110' is positioned, but also to cover a surface, which is opposite to the surface, on which the edge portion of the electrode assembly 110' is positioned, in the form of wrapping around the electrode assembly 110', by extending while covering the surface, on which the edge portion of the electrode assembly 110' is positioned, thereby preventing the second adhesive member 114' from coming off and fixing the edge portion of the electrode assembly 110' more firmly.

In some embodiments, the second adhesive member 114' may cover the electrode assembly 110' by 2/3 thereof or more in a direction z of the winding axis of the electrode assembly 110' and be arranged parallel to the winding direction x to fix the end of the electrode assembly 110', thereby fixing the end portion of the electrode assembly 110' more firmly.

The first adhesive member 115' may be arranged to cover a lower area of the electrode assembly 110', and for example, the first adhesive member 115' may be arranged in a direction perpendicular to the second surface of the electrode assembly 110' and to cover an area of a fifth surface and an area of a sixth surface by extending to the fifth surface and the sixth surface, each intersecting the second surface while covering the second surface of the electrode assembly 110', thereby preventing the second surface of the electrode assembly 110' from spreading apart.

In this regard, the area of the first adhesive member 115' covering the second surface may be 80% to 90%, and in the case that the area of the first adhesive member 115' covering the second surface is less than 80%, a part excluding the surface covered by the first adhesive member 115' may spread apart, causing damage to the electrode assembly 110' when inserted into the battery case, and in case that the area of the first adhesive member 115' covering the second surface is more than 90%, it may be difficult for the electrolyte injected together during the formation process of a battery to enter the inside of the electrode assembly 110', and even if the area of the first adhesive member 115' covering the second surface is only 90%, a gap of the electrode assembly 110' may be sufficiently prevented, so using more than 90% may result in waste of the adhesive member.

The first adhesive member 115' may include a plurality of holes 115h' penetrating the first adhesive member 115', and such a plurality of holes 115h' may facilitate the discharge of gas generated inside the battery case during the formation process of the battery, allowing gas remaining inside the battery case, particularly inside the electrode assembly 110', to be removed. In some embodiments, the first adhesive member 115' may include a plurality of holes 115h' penetrating the first adhesive member 115', thereby preventing air bubbles from being made between the first adhesive member 115' and a surface of the electrode assembly 110' when adhered to the electrode assembly 110'.

In some embodiments, the area of a plurality of holes 115h' penetrating the first adhesive member 115 may be 20% to 40% of the area of the first adhesive member 115', and in the case that the area of a plurality of holes 115h' penetrating the adhesive member 115' is less than 20% of the area of the first adhesive member 115', gas discharge effects in the formation process may be insufficient, and in the case that the area of a plurality of holes 115h' penetrating the adhesive member 115' is more than 40% of the area of the first adhesive member 115', tensile forces for preventing the second surface of the electrode assembly 110' from spreading apart may be insufficient.

In some embodiments, the first adhesive member 115' and the second adhesive member 114' may each include a tape of a non-stretched material having high tensile strength to prevent the electrode assembly 110' from spreading apart, and by wrapping around an outer perimeter of the electrode assembly 110' with the tape of a non-stretched material having high tensile strength, the volume of the electrode assembly 110' may be reduced.

As a result, the electrode assembly according to the embodiments of the invention may prevent damage to the electrode assembly during an assembly process of a secondary battery by attaching an adhesive member to outer circumferential surfaces and also reduce the volume of the electrode assembly, thereby facilitating the assembly process.

In some embodiments, during the formation process of a secondary battery, gas inside a cell may be effectively discharged, which may improve the stability of the secondary battery including the electrode assembly according to the embodiments of the invention.

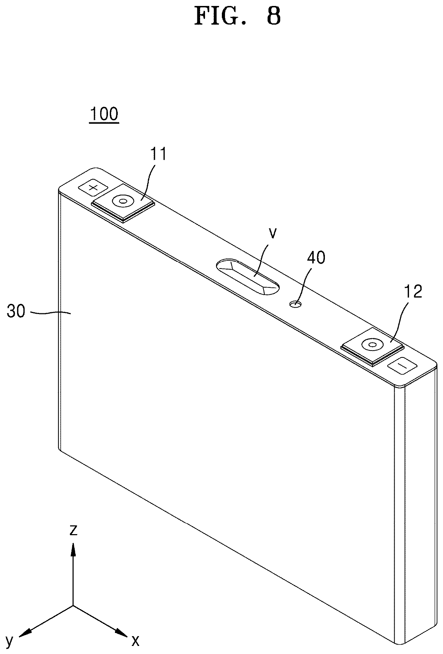

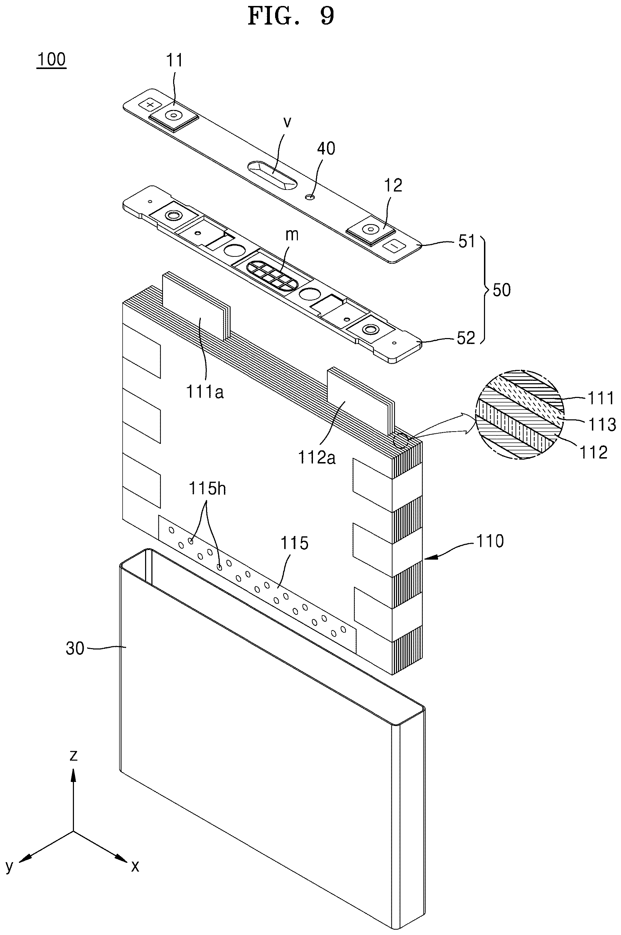

FIG. 8 is a perspective view schematically illustrating a secondary battery according to an embodiment of the invention, and FIG. 9 is an exploded perspective view schematically illustrating the secondary battery of FIG. 8.

Referring to FIGS. 8 and 9, the secondary battery 100 according to the embodiment may include at least one or more of the electrode assembly 110 laminated with a separator 113 as an insulator interposed between a positive electrode (the first electrode plate 111) and a negative electrode (the second electrode plate 112), a case 30 in which the electrode assembly 110 is housed, and a cap assembly 50 coupled to an opening of the case 30.

The secondary battery 100 according to the embodiment may be described as a square lithium ion secondary battery as an example. However, the invention is not limited thereto, and the invention may be applied to various types of batteries such as lithium polymer batteries or cylindrical batteries.

The electrode assembly 110 may include an electrode assembly 110 according to an embodiment of the invention, and because an electrode assembly 110 according to an embodiment of the invention is the same as described above, a detailed description thereof will be omitted.

In some embodiments, a first electrode plate 111 of the electrode assembly 110 may be provided with a first electrode tab 111a which is an area where a first electrode active material is not applied, and a second electrode plate 112 may be provided with a second electrode tab 112a where a second electrode active material is not applied, allowing a positive electrode terminal (first electrode terminal 11) and a negative electrode terminal (second electrode terminal 12) to be electrically coupled.

The case 30 may have an overall appearance of the secondary battery 100 and be made of a conductive metal such as aluminum, an aluminum alloy, or nickel-plated steel. In some embodiments, the case 30 may provide a space in which the electrode assembly 110 is accommodated.

The cap assembly 50 may include a cap plate 51 covering the opening of the case 30, and the case 30 and the cap plate 51 may be made of a conductive material. In this regard, the first electrode terminal 11 and the second electrode terminal 12 each electrically coupled to the first electrode plate 111 and the second electrode plate 112 may be installed to protrude outward by penetrating the cap plate 51.

In some embodiments, the cap plate 51 may be made of a thin plate and thus coupled to the opening of the case 30, and an electrolyte injection port 40 where a sealing plug may be installed may be made in the cap plate 51, and a vent portion v with a notch made may be installed.

In some embodiments, an insulation member 52 may be installed between the electrode assembly 110 and the cap plate 51, and the insulation member 52 may have a mesh m positioned at a position corresponding to the vent portion v positioned on the cap plate 51.

As a result, the secondary battery according to the embodiments of the invention may prevent damage to the electrode assembly during the assembly process of the secondary battery by attaching an adhesive member to the outer circumferential surfaces of the electrode assembly and may also reduce the volume of the electrode assembly, thereby facilitating the assembly process.

In some embodiments, because the gas inside the cell may be effectively discharged during the formation process of the secondary battery, the stability of the secondary battery may be improved.

According to embodiments of the invention, by attaching an adhesive member to the outer circumferential surfaces of an electrode assembly, a secondary battery may effectively discharge gas inside a cell during the formation process of the secondary battery, thereby improving stability.

Although the invention has been described above by means of limited embodiments and drawings, the invention is not limited thereto, and it is obvious that various modifications and variations are possible within the scope of the technical idea of the invention and the equivalent scope of the claims described below by a person skilled in the art to which the invention pertains.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An electrode assembly (110, 110'), comprising:
a first electrode plate (111, 111');
a second electrode plate (112, 112') on the first electrode plate (111, 111');
a separator (113, 113') between the first electrode plate (111, 111') and the second electrode plate (112, 112'); and
a first adhesive member (115, 115') covering a lower area of a laminated body in which the first electrode plate (111, 111'), the separator (113, 113'), and the second electrode plate (112, 112') are repeatedly laminated,
wherein the first adhesive member (115, 115') has a plurality of holes (115h, 115h') penetrating the first adhesive member (115, 115').

2. The electrode assembly (110, 110') as claimed in claim 1, wherein the laminated body has a square shape.

3. The electrode assembly (110, 110') as claimed in claim 2, wherein:
the square shape includes a first surface (110a) to a sixth surface (110f),
an electrode tab (111a, 112a) is on the first surface (110a), and
the first adhesive member (115, 115') covers a second surface (110b) of the first surface (110a) to the sixth surface (110f), the second surface (110b) being opposite to the first surface (110a).

4. The electrode assembly (110, 110') as claimed in claim 3, wherein the first adhesive member (115, 115') extends to a fifth surface (110e) and the sixth surface (110f), each of the fifth surface (110e) and the sixth surface (110f) intersecting the second surface (110b), the first adhesive member (115, 115') covering an area of the fifth surface (110e) and an area of the sixth surface (110f).

5. The electrode assembly (110, 110') as claimed in claim 3 or 4, wherein an area of the first adhesive member (115, 115') covering the second surface (110b) is 80% to 90% of an area of the second surface (110b).

6. The electrode assembly (110, 110') as claimed in any one of the preceding claims, wherein a total area of a plurality of the holes (115h, 115h') penetrating the first adhesive member (115, 115') is 20% to 40% of an area of the first adhesive member (115, 115').

7. The electrode assembly (110, 110') as claimed in any one of the preceding claims, wherein:
the laminated body includes a winding of the first electrode plate (111, 111'), the separator (113, 113'), and the second electrode plate (112, 112'), and
the first adhesive member (115, 115') is perpendicular to a winding direction of the winding.

8. The electrode assembly (110, 110') as claimed in claim 7, further comprising a second adhesive member (114, 114') having at least an area covering an edge portion of the laminated body.

9. A secondary battery (100), comprising:
a case (30);
an electrode assembly (110, 110') accommodated in the case (30);
a cap assembly (50) covering an open surface of the case (30); and
an electrode terminal (11, 12) protruding outward by penetrating the cap assembly (50) and electrically coupled to the electrode assembly (110, 110'), wherein:
the electrode assembly (110, 110') has a first adhesive member (115, 115') in a lower area thereof, and
the first adhesive member (115, 115') has a plurality of holes (115h, 115h') penetrating the first adhesive member (115, 115').

10. The secondary battery (100) as claimed in claim 9, wherein the electrode assembly (110, 110') includes:
a first electrode plate (111, 111'),
a second electrode plate (112, 112') on the first electrode plate (111, 111'),
a separator (113, 113') between the first electrode plate (111, 111') and the second electrode plate (112, 112'), and
a laminated body in which the first electrode plate (111, 111'), the separator (113, 113'), and the second electrode plate (112, 112') are repeatedly laminated, and
wherein the laminated body has a square shape,
the square shape includes a first surface (110a) to a sixth surface (110f),
an electrode tab (111a, 111a') is on the first surface (110a), and
the first adhesive member (115, 115') covers a second surface (110b) of the first surface (110a) to the sixth surface (110f), the second surface (110b) being opposite to the first surface (110a).

11. The secondary battery (100) as claimed in claim 10, wherein the first adhesive member (115, 115') extends to a fifth surface (110e) and the sixth surface (110f) of the first surface (110a) to the sixth surface (110f), each of the fifth surface (110e) and the sixth surface (110f) intersecting the second surface (110b), the first adhesive member (115, 115') covering an area of the fifth surface (110e) and an area of the sixth surface (110f).

12. The secondary battery (100) as claimed in claim 10 or 11, wherein an area of the first adhesive member (115, 115') covering the second surface (110b) is 80% to 90% of an area of the second surface (110b).

13. The secondary battery (100) as claimed in any one of claims 9 to 12, wherein a total area of the plurality of holes (115h, 115h') penetrating the first adhesive member (115, 115') is 20% to 40% of an area of the first adhesive member (115, 115').

14. The secondary battery (100) as claimed in any one of claims 9 to 13, wherein:
the electrode assembly (110, 110') includes a winding of a first electrode plate (111, 111'), a separator (113, 113'), and a second electrode plate (112, 112'), and
the first adhesive member (115, 115') is perpendicular to a winding direction of the winding.

15. The secondary battery (100) as claimed in claim 14, further comprising a second adhesive member (114, 114') having at least an area covering an edge portion of the laminated body.
